# EUROPEAN PATENT SPECIFICATION

(11) **EP 1 241 849 B1**
(45) Date of publication and mention of the grant of the patent: **09.11.2005**
(21) Application number: 01118752.3
(22) Date of filing: 07.08.2001
(51) Int. Cl.: H04L 29/06, H04L 29/08, G06F 1/00

(54) **Method of and apparatus for filtering access, and computer product**
Verfahren und Vorrichtung für filtern von Zugriff, und Computerprodukt
Procédé et appareil pour le filtrage d'accès, et logiciel associé

(30) Priority: 13.03.2001 JP 2001071214
(43) Date of publication of application: 18.09.2002
(73) Proprietor: FUJITSU LIMITED, Kawasaki-shi, Kanagawa 211-8588 (JP)
(72) Inventor: Mitomo, Masashi, Kawasaki-shi, Kanagawa 211-8588 (JP); Kotani, Seigo, Kawasaki-shi, Kanagawa 211-8588 (JP); Ono, Etsuo, Kawasaki-shi, Kanagawa 211-8588 (JP); Torii, Satoru, Kawasaki-shi, Kanagawa 211-8588 (JP); Takizawa, Fumie, Kawasaki-shi, Kanagawa 211-8588 (JP); Koyano, Osamu, Kawasaki-shi, Kanagawa 211-8588 (JP)
(74) Representative: Sunderland, James Harry

(56) References cited:
- US-A- 5 826 014
- US-A- 6 163 844
- GRAHAM R: "NIDS - Pattern Search vs. Protocol Decode" COMPUTERS & SECURITY. INTERNATIONAL JOURNAL DEVOTED TO THE STUDY OF TECHNICAL AND FINANCIAL ASPECTS OF COMPUTER SECURITY, ELSEVIER SCIENCE PUBLISHERS. AMSTERDAM, NL, vol. 20, no. 1, 31 January 2001 (2001-01-31), pages 37-41, XP004234372 ISSN: 0167-4048

## Description

### FIELD OF THE INVENTION

The present invention relates to a technology for allowing only a correct access request to pass from clients to a server that provides services in response to access requests.

### BACKGROUND OF THE INVENTION

In recent years, with the development in network technique, the use of WWW (WorldWide Web) serving as a dispersion system on the Internet has rapidly spread, and various HTTP servers for providing various services in response to various requests (access requests) from clients are accumulated. However, with the accumulation of the servers, incorrect accesses to servers by clients gradually increase in number.

More specifically, intruders or attackers incorrectly use servers of companies, associations, individuals, and the like without any authority, obstruct operations, or break (clutch) the servers, so that incorrect accesses in which persons who use the servers intentionally perform acts except for acts allowed by authorities given to the persons increase in number. For this reason, the necessity that the reliabilities of servers are secured by refusing incorrect accesses to the servers have intensified.

Conventionally, in order to protect a server from an incorrect access by a client, a fire wall is generally structured between the Internet and a corporate LAN (Local Area Network).

The fire wall is software for preventing external intrusion on a computer or a network connected to the Internet. A computer for fire wall which is designed to pass only specific data or specific protocols is set between a corporate LAN and the Internet, all data exchanges between the LAN and external computers are performed through this machine to prevent external intrusion.

In addition, in relation to the fire wall, incorrect access detection methods on network base and host base are known. The former, i.e., the incorrect access detection method on network base monitors a live packet flowing in a network to detect an incorrect access. The later, i.e., the incorrect access detection method on host base monitors log histories stored in a host to detect an incorrect access.

For example, US-A-5 826 014 and Graham, R: "Pattern Search vs. Protocol Decode" Computers Security International Journal devoted to the study of technical and financial aspects of computer security, Elsevier Science Publishers. Amsterdam, NL, Vol. 20, no. 1, 31^{st} January 2001 (2001-01-31), pages 37-41, ISSN:0167-40478, describe access controlling technologies between a server and clients in which only packets from transmission sources who have authority can access. US-A-6 163 844 describes a technology for monitoring patents or protocols contained in packets in a network intrusion detection system in order to avoid undesired access.

The transmission source client of an incorrect access is found out on the basis of an incorrect access detected by such an incorrect detection method, and transmission source information such as the IP address of the client who performs this incorrect access is accumulated in the computer for fire wall. In this manner, it is generally performed that the fire wall refuses an access request from the client including the transmission source information as an incorrect access.

However, in the prior art described above, a client who performs an incorrect access in the past is recognized as an incorrect client, and an access request from the incorrect client is refused as an incorrect access. For this reason, although a server can controlled for an incorrect access from the client who is recognized as an incorrect client, the server cannot be controlled for an incorrect access from a client who is not recognized as an incorrect client. More specifically, the server cannot be controlled for the first incorrect access from a client which has not been recognized as an incorrect client.

For this reason, it is a very important problem to control a server for an incorrect access from a client which is not recognized as an incorrect client. Preferably, a framework which decides whether an access request is a correct access request or an incorrect access request without considering transmission source information of an access request is necessary.

### SUMMARY OF THE INVENTION

An aspect of this invention provides a filtering apparatus which can prevent a server from an incorrect access from a client which is not recognized as an incorrect client. Another aspect of this invention provides a filtering method to be executed on the filtering apparatus according to the present invention. A further aspect of this invention provides a computer program which realizes the filtering method according to the present invention on a computer.

According to the present invention, an incorrect request database stores patterns of incorrect accesses to the Web server. Correctness of an access request from a client device to a server is estimated based on the patterns stored in the incorrect request database and a predetermined estimation rule. Decision about whether the access request is to be passed to the Web server is made based on the result of estimation on correctness of an access request and a predetermined decision rule.

Other aspects and features of this invention will become apparent from the following description with reference to the accompanying drawings.

### BRIEF DESCRIPTION OF THE DRAWINGS

Fig. 1 is a block diagram showing the configuration of a client server system according to a first embodiment.
Fig. 2 is a table showing a configuration of information stored in an incorrect request DB (database).
Fig. 3 is a flow chart for explaining a procedure of a filtering process according to the first embodiment.
Fig. 4 is a flow chart for explaining a procedure of a filtering process according to a second embodiment.
Fig. 5 is a block diagram showing the configuration of a client server system according to a third embodiment.
Fig. 6 is a flow chart for explaining a procedure of a filtering process according to the third embodiment.

### DESCRIPTION OF THE PREFERRED EMBODIMENTS

Embodiments of a filtering apparatus, a filtering method, and a computer program for causing a computer to execute the method according to the present invention will be described in detail below with reference to the accompanying drawings. In first to third embodiments described below, a case in which a filtering technique according to the present invention is applied to a server device for providing services depending on HTTP (HyperText Transfer Protocol) requests from a client device will be described below.

As a first embodiment, a case in which it is decided, by checking whether an HTTP request from a client device corresponds to the pattern of an incorrect request, whether an access is an incorrect access or not will be described below.

### (1) Entire Configuration of System

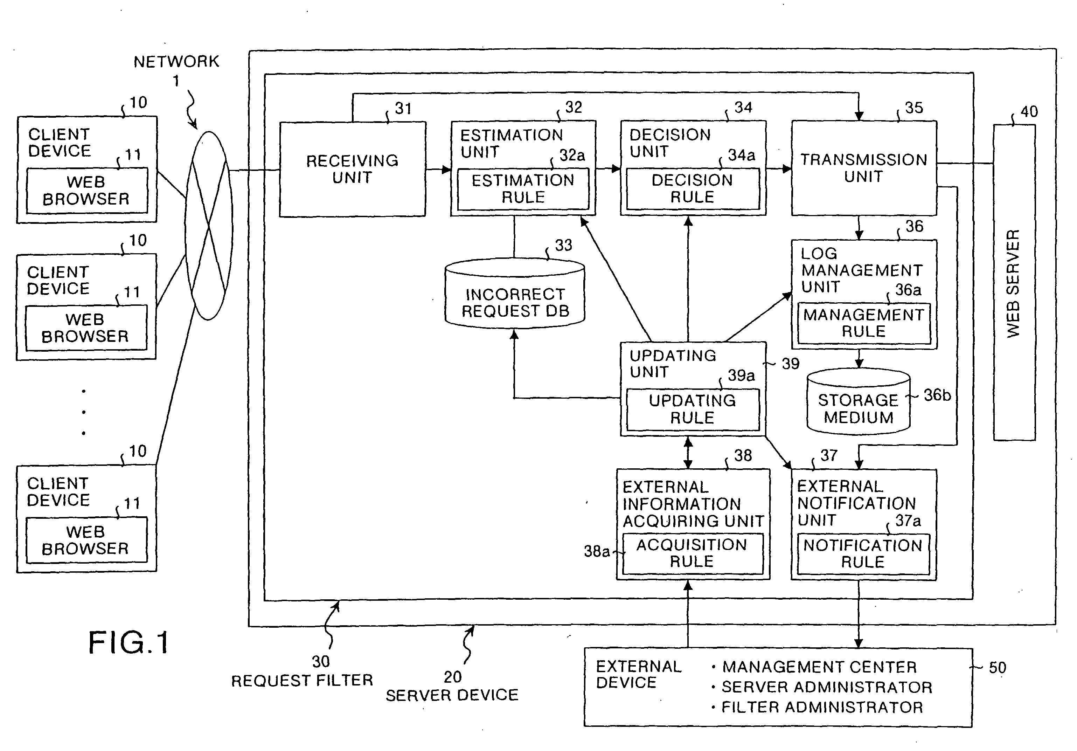

First, the configuration of a client server system according to the first embodiment will be described below. Fig. 1 is a block diagram showing the configuration of a client server system according to the first embodiment. As shown in Fig. 1, the client server system according to the first embodiment has a configuration in which a plurality of client devices 10 each having a Web browser 11, and a server device 20 having a request filter 30 serving as a filtering device and a Web server 40 are connected to each other through a network 1 such as the Internet such that the respective components can communicate with each other.

Briefly, in this client server system, the client device 10 performs various process requests such as HTTP requests to the server device 20 by the browser 11, and the Web server 40 of the server device 20 provides a service depending on an HTTP request from the client device 10 to the client device 10. The request filter 30 of the server device 20 is interposed between the client device 10 and the Web server 40, so that only a correct request of HTTP requests from the client device 10 is given to the Web server 40.

The client server system according to the first embodiment is characterized by a filtering process performed by the request filter 30 of the server device 20. More specifically, the estimation unit 32 of the request filter 30 estimates that an access is an incorrect access when an HTTP request from the client device 10 corresponds to any one of the patterns of incorrect accesses stored in the incorrect request DB 33, and the decision unit 34 decides that the HTTP request which is estimated as an incorrect access by the estimation unit 32 is not given to the Web server 40, so that only the HTTP request can be given to the Web server 40 without considering transmission source information of the HTTP request.

### (2) Configuration of Client Device

The configuration of the client device 10 shown in Fig. 1 will be described below. With reference to Fig. 1, the client device 10 comprises the Web browser 11, basically performs a process request such as an HTTP request to the server device 20, interprets Web data provided by the Web server 40 of the server device 20, and performs display control (browse process) for displaying the data on an output unit such as a monitor or the like.

The client device 10 is also a device which can perform an incorrect access to the server device 20 depending on a malicious using method. More specifically, when the client device 10 is used by a user such as an intruder or an attacker with malice, such an incorrect access that the user sees a password file on the Web server 40 which must not be seen by a remote user, that the user requests a file which does not exist on the Web server 40 to stop the function of the Web server 40, or that the user executes an arbitrary system command on the Web server 40 by a request including a command letter string can be performed. The request filter 30 functions to protect the Web server 40 from an incorrect access by the client device 10.

The client device 10 can be realized by a mobile communication terminal such as a personal computer or a workstation, a home video game, an internet TV, a PDA (Personal Digital Assistant), or a mobile telephone set or a PHS (Personal Handy Phone System). In addition, the client device 10 is connected to a network 1 through a communication device such as a modem, a TA, or a router and a telephone line or a leased line, and can accesses the server device 20 according to a predetermined communication protocol (e.g., a TCP/IP internet protocol).

### (3) Configuration of Web Server in Server Device

The configuration of the Web server 40 in the server device 20 shown in Fig. 1 will be described below. As shown in Fig. 1, the Web server 40 of the server device 20 receives an HTTP request from the client device 10 through the request filter 20, and provides a service or the like for transmitting various pieces of information described in a markup language such as an HTML (Hypertext Markup Language) to the client device 10 according to the HTTP request.

The Web server 40 performs the same operation as that of a general Web server in a functional concept. However, the Web server 40 mentioned here, unlike a general Web server, does not monitor a TCP (Transmission Control Protocol) of port number 80 assigned to the HTTP request in the server device 20.

More specifically, the HTTP request from the client device 10 is not directly received by the Web server 40, the request filter 30 receives the HTTP request to perform inter-process communication, so that only a correct HTTP request is given to the Web server 40.

### (4) Configuration of Request Filter in Server Device

The configuration of the request filter 30 in the server device 20 shown in Fig. 1 will be described below. As shown in Fig. 1, the request filter 30 comprises a receiving unit 31, an estimation unit 32, an incorrect request DB 33, a decision unit 34, a transmission unit 35, a log management unit 36, an external notification unit 37, an external information acquiring unit 38, and an updating unit 39.

Of these components, the receiving unit 31 is a process unit for monitoring a TCP port of port number 80 in the server device 20 to receive an HTTP request from the client device 10 before the HTTP request is received by the Web server 40. The HTTP request received by the receiving unit 31 from the client device 10 is output to the estimation unit 32 and the transmission unit 35.

The estimation unit 32 is a process unit for estimating the correctness of the HTTP request on the basis of the patterns of incorrect accesses stored in the incorrect request DB 33 and a predetermined estimation rule 32a to output the estimation result to the decision unit 34.

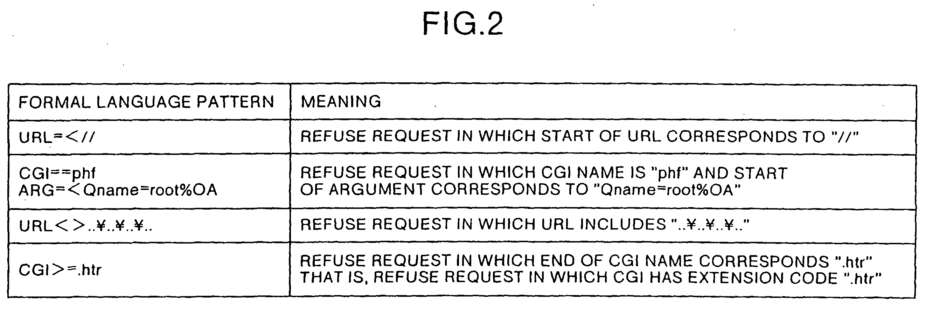

The incorrect request DB 33 to which the estimation unit 32 refers in estimation will be described below. Fig. 2 is a table showing a configuration of information stored in the incorrect request DB 33. As shown in Fig. 2, the incorrect request DB 33 is a database in which the patterns of incorrect accesses to the server, and stores a plurality of patterns obtained by describing incorrect accesses collected in the network world by using an illustrated formal language.

For example, the pattern "URL = <//" shown in Fig. 2 means an incorrect request in which the start of a URL (Uniform Resource Locator) is "//", and the pattern of "CGI = phf, ARG = <Qname = root%OA" means an incorrect request in which a CGI (common Gateway Interface) name is "phf" and the start of an argument of the CGI is "Qname = root%OA". The pattern of "URL <>.. ¥.. ¥.. ¥.." means an incorrect request in which a URL includes "..¥ ..¥ ..¥", and the pattern of "CGI>=. htr" means an incorrect request in which the end of a CGI name is ".htr".

Although not shown in Fig. 2, in the incorrect request DB 33, a plurality of incorrect command character strings for executing arbitrary system commands on the Web server 40 are stored. When the patterns of the command character strings are stored, the Web server 40 can be controlled for not only an incorrect access the attack method of which is known but also an incorrect access the attack method of which is not known.

With reference to the incorrect request DB 33, the estimation unit 32 estimates the correctness of an HTTP request on the basis of a predetermined estimation rule 32a. More specifically, when the HTTP request corresponds to any one of the patterns of incorrect accesses stored in the incorrect request DB 33, it is estimated that the HTTP request is an incorrect access. On the other hand, when the HTTP request does not correspond to any one of the patterns of incorrect accesses stored in the incorrect request DB 33, the estimation unit 32 estimates that the HTTP request is a correct access.

Returning to the description of Fig. 1, the decision unit 34 is a process unit for deciding, on the basis of the estimation result received from the estimation unit 32 and the predetermined decision rule 34a, whether the HTTP request is given to the Web server 40 or not to output the decision result to the transmission unit 35. More specifically, when the decision unit 34 receives an estimation result that the HTTP request is an incorrect access from the estimation unit 32, the decision unit 34 decides that the HTTP request is not given to the Web server 40 (impossible decision) . On the other hand, when the decision unit 34 receives an estimation result that the HTTP request is a correct access, the decision unit 34 decides that the HTTP request is given to the Web server 40 (possible decision).

The transmission unit 35 is a process unit for controlling transmission of the HTTP request received from the receiving unit 31 on the basis of the decision result received from the decision unit 34. More specifically, when a possible decision is received from the decision unit 34, the HTTP request is given to the Web server 40 by inter-process communication. On the other hand, when an impossible decision is received from the decision unit 34, giving the HTTP request to the Web server 40 is refused, and the incorrect request is wasted.

The log management unit 36 is a process unit for storing information related to the incorrect request which is decided not to be given to the Web server 40 by the decision unit 34 in the storage medium 36b and managing the information on the basis of the predetermined management rule 36a. More specifically, on the basis of the management rule 36a, pieces of information related to the incorrect request such as the contents of the incorrect request, transmission source information (IP address or host name), transmission time, the reason of an estimation result obtained by the estimation unit 32, and the reason of a decision result obtained by the decision unit 34 are selectively edited, and the selectively edited pieces of information are selectively stored in the storage medium 36b depending on the level of aggression of the incorrect request. For example, only incorrect requests having high levels of aggression are stored.

The pieces of information stored in the storage medium 36b can be output to the outside of the server device 20 by ejecting the storage medium 36b or using a communication line. In addition, the pieces of information stored in the storage medium 36b are analyzed to analyze the tendency of an incorrect access, so that a further countermeasure for maintenance of the Web server 40 can be performed.

The external notification unit 37 is a process unit for notifying information related to an incorrect request which is decided not to be given to the Web server 40 by the decision unit 34 to the external device 50. More specifically, as in the process performed by the log management unit 36, on the basis of the notification rule 37a, pieces of information related to the incorrect request such as the contents of the incorrect request, transmission source information (IP address or host name), transmission time, the reason of an estimation result obtained by the estimation unit 32, and the reason of a decision result obtained by the decision unit 34 are selectively edited, and the selectively edited pieces of information are selectively stored in the external device 50 depending on the level of aggression of the incorrect request.

The external device 50 which receives a notice from the external information acquiring unit 38 is a communication device which is operated by an administrator of the Web server 40, an administrator of the request filter 30, an administrator of the entire server device 20, an administrator of a public association (management center) which monitors the network as a whole, and the like (these administrators are generally called an "administrator"). The external notification unit 37, for example, rapidly notifies incorrect requests having high levels of aggression to the administrator on real time, and notifies incorrect requests having low levels of aggression to the administrator at once, so that the external notification unit 37 can urge the administrator which receives the notice to rapidly perform a countermeasure for maintenance of the Web server 40.

The external information acquiring unit 38 is a process unit for actively or passively acquiring, on the basis of the predetermined acquisition rule 38a, information used in an updating process performed by the updating unit 39 from the outside of the request filter 30 such as the external device 50 or the Web server 40. For example, the pattern of an incorrect request newly input by an administrator through the external device 50, change designation information of the estimation rule 32a input by the administrator through the external device 50, and the like are acquired, and information such as the status of damage or the contents of an incorrect request is acquired from the Web server 40 damaged by the incorrect request. The acquisition rule 38a is a rule which acquires only information from an authorized administrator.

The updating unit 39 is a process unit for updating, on the basis of the predetermined updating rule 39a, the incorrect request DB 33, the estimation rule 32a, the decision rule 34a, the management rule 36a, the notification rule 37a, the acquisition rule 38a, or information stored in the updating rule. For example, when the pattern of a new incorrect request is accepted from the external information acquiring unit 38, the pattern of the incorrect request is stored in the incorrect request DB 33. When change designation information of the estimation rule 32a is accepted, the estimation rule 32a is changed depending on the change designation information. When the updating process is performed as described above, the updating unit 39 can tactfully cope with incorrect accesses advancing everyday.

### (5) Filtering Process

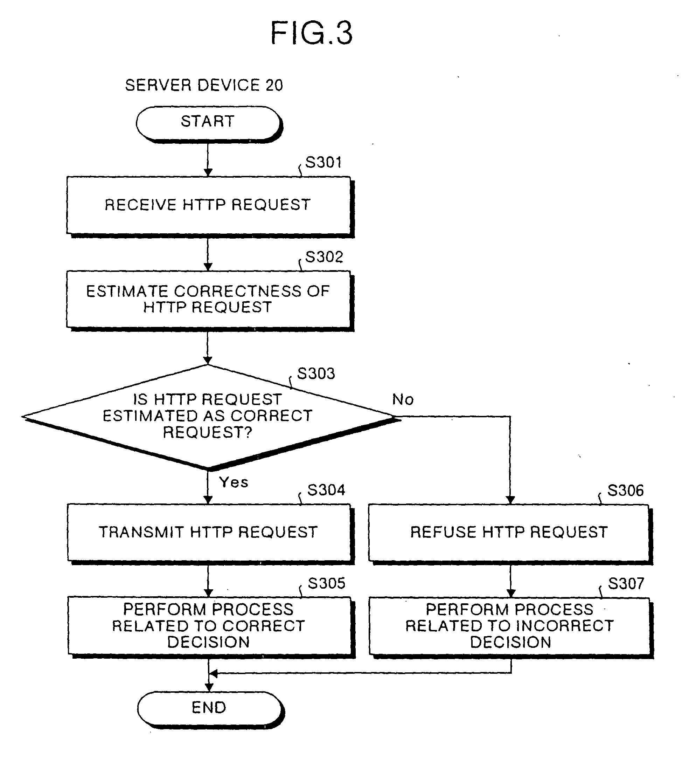

A procedure of a filtering process according to the first embodiment will be described below. Fig. 3 is a flow chart for explaining the procedure of a filtering process according to the first embodiment. As shown in Fig. 3, the receiving unit 31 of the request filter 30 in the server device 20 receives an HTTP request from the client device 10 before the HTTP request is received by the Web server 40 (step S301).

The estimation unit 32 of the request filter 30 estimates the correctness of the HTTP request on the basis of the pattern of an incorrect access stored in the incorrect request DB 33 and the predetermined estimation rule 32a (step S302). More specifically, when the HTTP request corresponds to any one of the patterns of incorrect accesses, the estimation unit 32 estimates that the HTTP request is an incorrect request. On the other hand, when the HTTP request does not corresponds to any one of the patterns of incorrect accesses, the estimation unit 32 estimates that the HTTP request is a correct request.

Thereafter, the decision unit 34 of the request filter 30 decides, on the basis of the estimation result received from the estimation unit 32 and the predetermined decision rule 34a, whether the HTTP request is given to the Web server 40 or not (step S303). More specifically, the decision unit 34 decides whether it is estimated or not by the estimation unit 32 that the HTTP request is a correct request.

If it is decided by this decision that it is estimated that the HTTP request is a correct request (YES in step S303), the transmission unit 35 of the request filter 30 gives the HTTP request to the Web server 40 by inter-process communication (step S304), and the Web server 40 performs a process in a correctness decision state, e.g., a process of transmitting information depending on the HTTP request to the client device 10 (step S305).

In contrast to this, if it is decided that it is estimated that the HTTP request is an incorrect request (NO in step S303), the transmission unit 35 refuses to give the HTTP request to the Web server 40 (step S306), and the respective components of the request filter 30 perform processes in an incorrect decision state such as waste of an incorrect request, storage in the storage medium 36b, and notification to the external device 50 (step S307).

As has been described above, according to the first embodiment, without transmission source information of an access request, it can be rapidly and reliably decided by checking whether the concrete request contents of the access request correspond to the pattern of an incorrect request or not whether the access is an incorrect access or not. In this manner, the Web server 40 can also be rapidly and reliably controlled for an incorrect access from the client device 10 which is not recognized as an incorrect client.

In the above first embodiment, the case in which it is decided by checking whether an HTTP request from a client device corresponds to the pattern of an incorrect request whether an access is an incorrect access or not is described. However, the present invention is not limited to this case, and the present invention can similarly applied to a case in which it is decided by the degree of correspondence between an HTTP request and the patterns of incorrect accesses.

As a second embodiment, a case in which it is decided by the degree of correspondence between an HTTP request and the patterns of incorrect accesses whether an access is an incorrect access or not will be described below. In second embodiment, the system configuration of a client server system is the same as that shown in Fig. 1, and a description thereof will be omitted.

First, a estimation unit 32 and a decision unit 34 which are characteristic parts of second embodiment will be described below. The estimation unit 32 in second embodiment calculates a predetermined estimation value depending on the degree of correspondence between an HTTP request from the client device 10 and the patterns of incorrect accesses stored in the incorrect request DB 33 and outputs the estimation value to the decision unit 34.

More specifically, the number of patterns, which correspond to the HTTP request, of the patterns of incorrect accesses is calculated, or the degrees of danger are given to the respective patterns to calculate the degrees of danger of the patterns which correspond to the HTTP request, so that an estimation value called a DI (Danger Index) representing the degree of danger of the HTTP request is calculated. The estimation value DI is an integer value falling within the range of, e.g., 1 to 100, and is calculated as a large value when the degree of danger of an HTTP request is high.

The decision unit 34 in second embodiment compares the estimation value DI calculated by the estimation unit 32 with a predetermined threshold value to decide whether the decision result is given to the Web server 40 or not, and outputs decision result to the transmission unit 35.

More specifically, if it is assumed that the predetermined threshold value is 50, when an estimation value the DI of which is 50 or more is received from the estimation unit 32, it is decided that an HTTP request is not given to the Web server 40 (impossible decision). On the other hand, when an estimation value the DI of which is smaller than 50 is received from the estimation unit 32, it is decided that an HTTP request is given to the Web server 40 (possible decision).

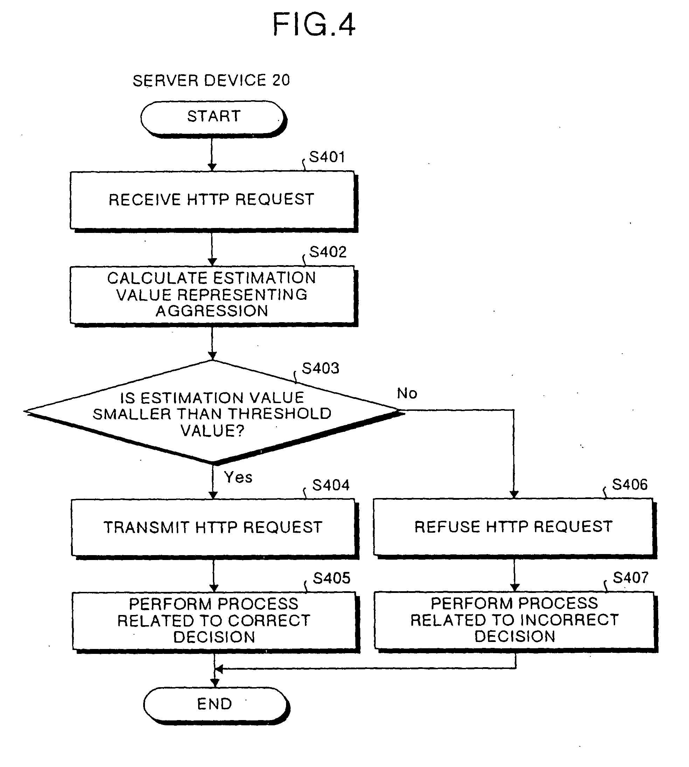

A procedure of a filtering process according to the second embodiment will be described below. Fig. 4 is a flow chart for explaining the procedure of a filtering process according to the second embodiment. As shown in Fig. 4, the receiving unit 31 of the request filter 30 in the server device 20 receives an HTTP request from the client device 10 before the HTTP request is received by the Web server 40 (step S401).

The estimation unit 32 of the request filter 30 calculates an estimation value DI depending on the degree of correspondence between an HTTP request and the patterns of incorrect accesses stored in the incorrect request DB 33 (step S402). The decision unit 34 of the request filter 30 compares the estimation value DI calculated by the estimation unit 32 with a predetermined threshold value to decide whether the HTTP request is given to the Web server 40 or not (step S403). More specifically, it is decided whether the estimation value DI is equal to or more than the threshold value or not.

If it is decided by the above decision that the estimation value DI is smaller than the predetermined threshold value (YES in step S403), the transmission unit 35 of the request filter 30 gives the HTTP request to the Web server 40 by inter-process communication (step S404), and the Web server 40 performs a process in a correctness decision state, e.g., a process of transmitting information depending on the HTTP request to the client device 10 (step S405).

In contrast to this, if it is decided that the estimation value DI is the predetermined threshold value or more (NO in step S403), the transmission unit 35 of the request filter 30 refuses to give the HTTP request to the Web server 40 (step S406), and the respective components of the request filter 30 perform processes in an incorrect decision state such as waste of an incorrect request, storage in the storage medium 36b, and notification to the external device 50 (step S407).

As has been described above, according to the second embodiment, by comparison between an estimation value and a threshold value, it can be decided with some margin whether an access is an incorrect access or not. In this manner, the Web server 40 can be controlled with some margin for an incorrect access from the client device 10 which is not recognized as an incorrect client.

In the first and second embodiments, the case in which estimation based on the patterns of incorrect accesses is performed for all HTTP requests from client devices is performed. However, the present invention is not limited to this case. The present invention can similarly applied to the case in which estimation is performed for only some of the HTTP requests.

As a third embodiment, a case in which filtering process constituted by two layers, and estimation based on the patterns of incorrect accesses is performed to some of the HTTP requests will be described below.

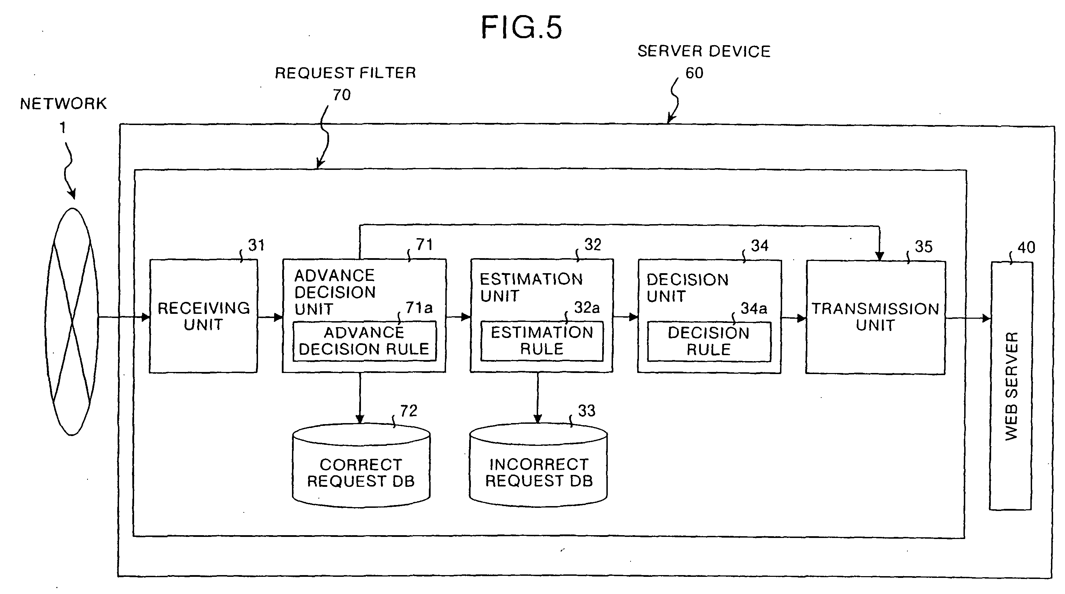

Fig. 5 is a block diagram showing the configuration of a client server system according to the third embodiment. The same reference numerals as in Fig. 1 denote the same parts in Fig. 5, and a description thereof will be omitted. An advance decision unit 71 and a correct request DB 72 which are characteristic parts of third embodiment will be described below.

The advance decision unit 71 of a request filter 70 in a server device 60 is a process unit for deciding whether estimation of an HTTP request can be omitted or not on the basis of the patterns of correct accesses stored in the correct request DB 72 and a predetermined advance decision rule 71a before estimation of correctness is performed by the estimation unit 32.

The correct request DB 72 which is referred to by the advance decision unit 71 will be described below. The correct request DB 72 is a database in which the patterns of correct accesses to the Web server 40 are stored. More specifically, the path of a file, which may be seen by a remote user, of files existing on the Web server 40 is stored.

The file which may be seen by the remote user is a file other than a password file or the like which must not be seen by the remote user. For example, the file which may be seen by the remote user includes an image file having a very high rate as request contents of an HTTP request to the Web server 40 or the like, which is rarely incorrectly accessed.

With reference to the correct request DB 72, the advance decision unit 71 decides, on the basis of the predetermined advance decision rule 71a, whether estimation of the HTTP request can be omitted or not. More specifically, when the HTTP request corresponds to any one of the patterns of correct access, it is decided that estimation of the HTTP request can be omitted. On the other hand, when the HTTP request corresponds to any one of the patterns of correct accesses stored in the correct request DB 72, it is decided that the estimation of the HTTP request can be omitted.

The advance decision unit 71 outputs only the HTTP request the estimation of which cannot be omitted to the estimation unit 32, and omits the processes performed by the estimation unit 32 and the decision unit 34 with respect to an HTTP request the estimation of which can be omitted to give the HTTP request to the Web server 40 through the transmission unit 35.

The patterns of correct accesses stored in the correct request DB 72 are updated by the updating unit 39 depending on a case in which an image file is added to the Web server 40.

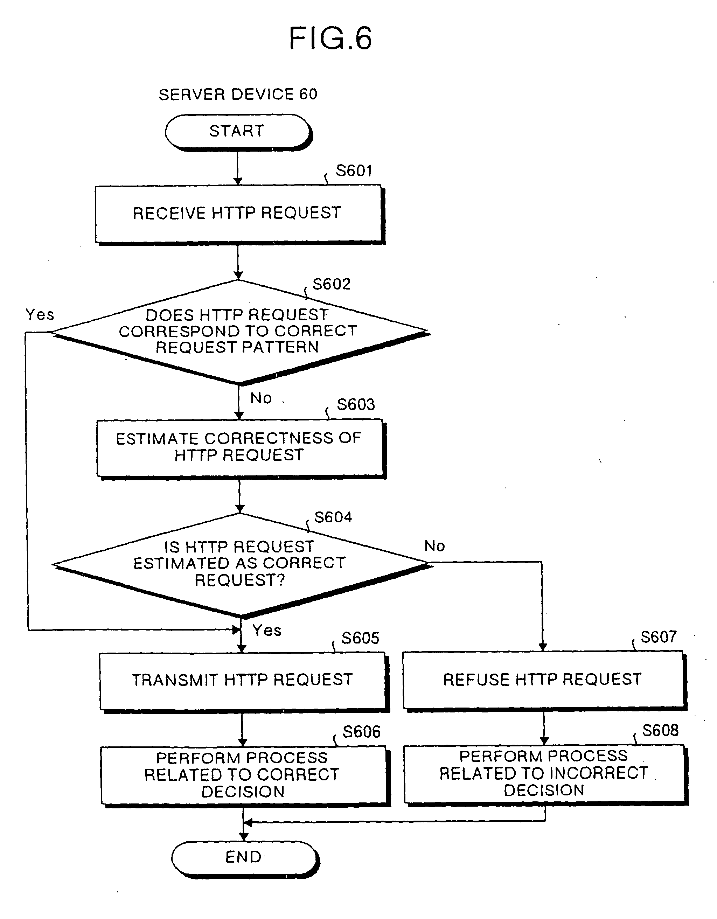

A procedure of a filtering process according to the third embodiment will be described below. Fig. 6 is a flow chart for explaining the procedure of the filtering process according to thir embodiment. As shown in Fig. 6, the receiving unit 31 of the request filter 70 in the server device 60 receives an HTTP request from the client device 10 before the HTTP request is received by the Web server 40 (step S601).

The advance decision unit 71 of the request filter 70 decides, on the basis of the patterns of correct accesses stored in the correct request DB 72 and the predetermined advance decision rule 71a, whether estimation of the HTTP request can be omitted or not (step S602). More specifically, the advance decision unit 71 decides whether the HTTP request corresponds to any one of the patterns of correct accesses stored in the correct request DB 72.

If it is decided by the above decision that the HTTP request corresponds to any one of the patterns of correct accesses (YES in step S602), estimation of the correctness of the HTTP request is omitted, and the transmission unit 35 of the request filter 70 gives the HTTP request to the Web server 40 through inter-process communication (step S605), and the Web server 40 performs a process in a correct decision state such as a process of transmitting information depending on the HTTP request to the client device 10 (step S606).

In contrast to this, if it is decided that the HTTP request does not correspond to any one of the patterns of correct accesses (NO in step S602), the HTTP request is given to the estimation unit 32, and the same process as the filtering process in first and second embodiments is performed (steps S603 to 608).

More specifically, the estimation unit 32 of the request filter 70 estimates the correctness of the HTTP request (step S603), and the decision unit 34 decides whether the HTTP request is given to the Web server 40 (step S604).

If it is decided by the above decision that it is estimated that the HTTP request is a correct request (YES in step S604), the transmission unit 35 of the request filter 70 gives the HTTP request to the Web server 40 by inter-process communication (step S605), and the Web server 40 performs a process in a correct decision state such as a process of transmitting information depending on the HTTP request to the client device 10 (step S606).

In contrast to this, if it is decided that it is estimated that the HTTP request is an incorrect request (NO in step S604), the transmission unit 35 of the request filter 70 refuses to give the HTTP request to the Web server 40 (step S607), and the respective components of the request filter 70 perform processes in an incorrect decision state such as waste of an incorrect request, storage in the storage medium 36b, and notification to the external device 50 (step S608).

As described above, according to the third embodiment, with respect to an HTTP request, such as an HTTP request having a high rate of request but a low level of aggression, for requesting an image file, a rapid process can be performed without the processes performed by the estimation unit 32 and the incorrect request DB 33. With respect to an HTTP request, having a high level of aggression, for requesting a password file or a file existing on the Web server 40, the processes by the estimation unit 32 and the incorrect request DB 33 are performed, so that the attack can be effectively prevented.

In the first to third embodiments, the case in which an HTTP request from the client device 10 is filtered is described. The present invention is not limited to this case, and can similarly be applied to a case in which any information such as FTP (File Transfer Protocol), telenet, or console which is input from the client device 10 to the Web server 40.

In the first to third embodiments, the case in which the request filters 30 and 70 serving as filtering devices are arranged in the server devices 40 and 60, respectively is described. However, the present invention is not limited to the case. For example, the present invention can similarly applied to any system configuration in which a request filter is interposed between a client device and a Web server such as a configuration in which request filters are arranged on the client device sides or a configuration in which a plurality of Web servers are controlled by one request filter.

The filtering methods described in the first to third embodiments can be realized by executing prepared programs in computers such as personal computers and workstations. The programs can be distributed through networks such as the Internet. The programs can be recorded on computer readable recording media such as a hard disk, a floppy disk, a CD-ROM, an MO, and a DVD, and are executed such that the programs are read from the recording media by computers.

As has been described above, according to this invention, correctness of an access request is estimated on the basis of the patterns of incorrect accesses in an incorrect pattern database in which the patterns of incorrect accesses to a server are stored and a predetermined estimation rule, and it is decided, on the basis of the estimation result and a predetermined decision rule, whether the access request is given to the server or not, so that it can be decided on the basis of the concrete request contents of the access request without transmission source information of the access request. For this reason, only a correct access request can be given to the server, and the server can be protected from an incorrect access from a client which is not recognized as an incorrect client.

Furthermore, it is estimated that the access request is an incorrect access when the access request corresponds to any one of the patterns of incorrect accesses stored in the incorrect pattern database, and it is estimated that the access request is a correct access when the access request does not correspond to any one the patterns of incorrect accesses stored in the incorrect pattern database, and the decision unit decides that the access request which is estimated as an incorrect access is not given to the server and decides that the access request which is estimated as a correct access is given to the server. For this reason, it can be rapidly and reliably decided, by checking whether the access request corresponds to the pattern of an incorrect request or not, whether the access is an incorrect access or not. Therefore, the server can be protected from an incorrect access from a client which is recognized as an incorrect client.

Furthermore, a predetermined estimation value is calculated depending on the degree of correspondence between the access request and the patterns of incorrect accesses stored in the incorrect pattern database, and the estimation value calculated by the estimation unit is compared with a predetermined threshold value to decide whether the access request is given to the server or not. For this reason, it can be decided with some margin by comparing the estimation value and the threshold value with each other whether the access request is an incorrect access or not. Therefore, the server can also be protected with some margin from an incorrect access from the client device which is not recognized as an incorrect client.

Furthermore, prior to estimation of correctness, with reference to the correction pattern database in which the patterns of correct accesses to the server are stored, it is decided whether an access request corresponds to any one of the patterns of correct accesses stored in the correct pattern database, and the correctness of only an access request which is decided not to correspond to the pattern of a correct access is estimated. For this reason, an access request which corresponds to the pattern of a correct access is given to the server without being estimated with respect to correctness, and the correctness of only an access request which does not correspond to the pattern of a correct access can be estimated. Therefore, it can be rapidly decided as a whole whether an access is an incorrect access or not.

Furthermore, on the basis of a predetermined external transmission rule, an access request which is decided not to be given to the server can be sent to a predetermined external device. For this reason, information related to an incorrect access can be rapidly transmitted to an administrator of the server, an administrator of a filtering device, an administrator of an entire server device, an administrator of a public association which monitors the network as a whole, and the like. Therefore, this configuration can urge these administrators to perform a countermeasure for maintenance of the server.

Furthermore, on the basis of a predetermined storage rule, an access request which is decided not to be given to the server is stored in a predetermined storage unit. For this reason, information related to incorrect accesses stored in the storage can be analyzed. Therefore, a further countermeasure for maintenance of the server can be performed.

Furthermore, on the basis of a predetermined updating rule, the incorrect pattern database, the correct pattern database, the estimation rule, the decision rule, the external transmission rule, the storage rule, or an updating rule is updated. For this reason, the pattern of an incorrect access which is newly found can be registered in the incorrect pattern database. Therefore, this configuration can tactfully cope with incorrect accesses advancing everyday.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A filtering apparatus (30), interposed between a client (10) and a server (20), said server (20) providing services depending on access requests from said client (10), for passing to said server (20) only a correct access request from said client (10), said filtering device (30) comprising:
an incorrect pattern database (33) which stores patterns of incorrect accesses to said server (20);
an estimation unit (32) which estimates the correctness of the access request on the basis of the patterns of incorrect accesses stored in said incorrect pattern database (33) and a predetermined estimation rule (32a); and
a decision unit (34) which decides, on the basis of a result of estimation by said estimation unit (32) and a predetermined decision rule (34a), whether the access request is to be passed to said server (20).

2. The filtering apparatus (30) according to claim 1, wherein said estimation unit (32) estimates that the access request is an incorrect access when the access request corresponds to any one of the patterns of incorrect accesses stored in said incorrect pattern database (33), and estimates that the access request is a correct access when the access request does not correspond to any one the patterns of incorrect accesses stored in the incorrect pattern database (33), and
said decision unit (34) decides that the access request which is estimated as an incorrect access by said estimation unit (32) is not to be passed to said server (20), and decides that the access request which is estimated as a correct access by said estimation unit (32) is to be passed to said server (20).

3. The filtering apparatus (30) according to claim 1, wherein said estimation unit (32) calculates a predetermined estimation value depending on the degree of correspondence between the access request and the patterns of incorrect accesses stored in said incorrect pattern database (33), and
said decision unit (34) compares the estimation value calculated by said estimation unit (32) with a predetermined threshold value to decide whether the access request is to be passed to said server (20).

4. The filtering apparatus (30) according to claim 1, 2 or 3, further comprising:
a correct pattern database (72) which stores patterns of correct accesses to said server (20); and
an advance decision unit (71) which decides whether the access request corresponds to any one of the patterns of correct accesses stored in said correct pattern database (72) prior to estimation of correctness performed by said estimation unit (32),
wherein said estimation unit (32) estimates correctness of only that access request which said advance decision unit (71) decides that does not correspond to the patterns of correct accesses stored in said correct pattern database (72).

5. The filtering apparatus (30) according to any preceding claim, further comprising an external transmission unit (38) which transmits an access request which is decided not to be passed to said server (20) by said decision unit (34) to a predetermined external device (50) on the basis of a predetermined external transmission rule (38a).

6. The filtering apparatus (30) according to any preceding claim, further comprising a storage unit which stores an access request which is decided not to be passed to said server (20) by said decision unit (34) on the basis of a predetermined storage rule.

7. The filtering apparatus (30) according to any preceding claim, further comprising an updating unit (39) which updates the incorrect pattern database (33), the correct pattern database (72), the estimation rule (32a), the decision rule (34a), the external transmission rule (38a), the storage rule, or an updating rule (39a) on the basis of a predetermined updating rule (39a).

8. A filtering method of passing to a server (20) only a correct access request from a client (10), said server (20) providing services depending on access requests from said client (10), the method comprising the steps of:
referring to an incorrect pattern database (33) in which the patterns of incorrect accesses to said server (20) are stored to estimate correctness of the access request on the basis of the patterns of incorrect accesses which are referred to and a predetermined estimation rule (32a); and
deciding (S303), on the basis of result of the estimation at the estimation step (S302) and a predetermined decision rule (34a), whether the access request is to be passed to said server.

9. The filtering method according to claim 8, wherein in the estimation step (S302) it is estimated that the access request is an incorrect access when the access request corresponds to any one of the patterns of incorrect accesses stored in the incorrect pattern database (33), and it is estimated the access request is a correct access when the access request does not correspond to any one of the patterns of incorrect accesses stored in said incorrect pattern database (33), and
in the decision step (S303) it is decided that the access request which is estimated as an incorrect access at the estimation step (S302) is not to be passed to said server (20), and it is decided that the access request which is estimated as a correct access at the estimation step (S302) is to be passed to said server (20).

10. The filtering method according to claim 8, wherein at the estimation step (S302) a predetermined estimation value is calculated depending on the degree of correspondence between the access request and the patterns of incorrect accesses stored in said incorrect pattern database (33), and
in the decision step (S303) the estimation value calculated at the estimation step (S302) is compared (S403) with a predetermined threshold value to decide (S404, S406) whether the access request is to be passed to said server (20).

11. The filtering method according to claim 8, 9 or 10, further comprising the advance decision step (S602) of deciding, with reference to a correct pattern database in which patterns of correct accesses to said server are stored, whether the access request corresponds to any one of the patterns of correct accesses stored in said correct pattern database prior to estimation of correctness performed by the estimation step (S603),
wherein in the estimation step correctness of only an access request which is decided not to correspond to the patterns of correct accesses at the advance decision step is estimated.

12. The filtering method according to claim 8, 9, 10 or 11, further comprising the external transmission step of transmitting an access request which is decided not to be passed to said server (20) at the decision step (S406, S607) to a predetermined external device (50) on the basis of a predetermined external transmission rule (37a).

13. The filtering method according to claim 8, 9, 10, 11 or 12, further comprising the storage step of storing an access request which is decided not to be passed to said server at the decision step on the basis of a predetermined storage rule.

14. The filtering method according to claim 8, 9, 10, 11, 12 or 13, further comprising the updating step of updating the incorrect pattern database (33), the correct pattern database (72), the estimation rule (32a), the decision rule (34a), the external transmission rule (37a), the storage rule, or an updating rule (39a) on the basis of a predetermined updating rule (39a).

15. A computer program containing instructions which when executed on a computer realizes a filtering method of passing to a server (20) only a correct access request from a client (10), said server (20) providing services depending on access requests from said client (10), the method comprising the steps of:
referring to an incorrect pattern database (33) in which the patterns of incorrect accesses to said server (20) are stored to estimate correctness of the access request on the basis of the patterns of incorrect accesses which are referred to and a predetermined estimation rule (32a); and
deciding (S303), on the basis of result of the estimation at the estimation step (S302) and a predetermined decision rule (34a), whether the access request is to be passed to said server (20).

16. The computer program according to claim 15, wherein in the estimation step (S302) it is estimated that the access request is an incorrect access when the access request corresponds to any one of the patterns of incorrect accesses stored in the incorrect pattern database (33), and it is estimated the access request is a correct access when the access request does not correspond to any one the patterns of incorrect accesses stored in said incorrect pattern database (33), and
in the decision step (S303) it is decided that the access request which is estimated as an incorrect access at the estimation step (S302) is not to be passed to said server, and it is decided that the access request which is estimated as a correct access at the estimation step (S302) is to be passed to said server (20).

17. The computer program according to claim 15, wherein at the estimation step (S302) a predetermined estimation value is calculated depending on the degree of correspondence between the access request and the patterns of incorrect accesses stored in said incorrect pattern database (33), and
in the decision step (S303) the estimation value calculated at the estimation step (S302) is compared (S403) with a predetermined threshold value to decide whether the access request is to be passed to said server (20).

18. The computer program according to claim 15, 16 or 17, further containing instructions which when executed on a computer realize the advance decision step (S602) of deciding, with reference to a correct pattern database (72) in which patterns of correct accesses to said server (20) are stored, whether the access request corresponds to any one of the patterns of correct accesses stored in said correct pattern database (72) prior to estimation of correctness performed by the estimation step (S603),
wherein in the estimation step (S603) correctness of only an access request which is decided not to correspond to the patterns of correct accesses at the advance decision step (S602) is estimated.

19. The computer program according to claim 15, 16, 17 or 18, further containing instructions which when executed on a computer realize the external transmission step (S304, S404, S605) of transmitting an access request which is decided not to be passed to said server at the decision step (S303) to a predetermined external device (50) on the basis of a predetermined external transmission rule (37a).

20. The computer program according to claim 15, 16, 17, 18 or 19, further containing instructions which when executed on a computer realize the storage step of storing an access request which is decided not to be passed to said server (20) at the decision step (S303) on the basis of a predetermined storage rule.

21. The computer program according to claim 15, 16, 17, 18, 19 or 20, further containing instructions which when executed on a computer realize the updating step of updating the incorrect pattern database, the correct pattern database (72), the estimation rule (32a), the decision rule (34a), the external transmission rule (37a), the storage rule, or an updating rule (39a) on the basis of a predetermined updating rule (39a).

## Patentansprüche

1. Filtervorrichtung (30), die zwischen einem Client (10) und einem Server (20) angeordnet ist, wobei der Server (20) Dienste abhängig von Zugriffsanforderungen von dem Client (10) bereitstellt, um an den Server (20) nur eine korrekte Zugriffsanforderung von dem Client (10) weiterzuleiten, wobei die Filtervorrichtung (30) umfasst:
eine Datenbank für inkorrekte Muster (33), die Muster von inkorrekten Zugriffen auf den Server (20) speichert;
eine Schätzeinheit (32), die die Korrektheit der Zugriffsanforderung auf der Grundlage der Muster von inkorrekten Zugriffen, die in der Datenbank für inkorrekte Muster (33) gespeichert sind, und einer vorbestimmten Schätzregel (32a) schätzt; und
eine Entscheidungseinheit (34), die auf der Grundlage eines Ergebnisses der Schätzung durch die Schätzeinheit (32) und einer vorbestimmten Entscheidungsregel (34a) schätzt, ob die Zugriffsanforderung an den Server (20) weiterzuleiten ist.

2. Filtervorrichtung (30) gemäß Anspruch 1, bei der die Schätzeinheit (32) schätzt, dass die Zugriffsanforderung ein inkorrekter Zugriff ist, wenn die Zugriffsanforderung irgendeinem der Muster von inkorrekten Zugriffen entspricht, die in der Datenbank für inkorrekte Muster (33) gespeichert sind, und schätzt, dass die Zugriffsanforderung ein korrekter Zugriff ist, wenn die Zugriffsanforderung nicht irgendeinem der Muster von inkorrekten Zugriffen entspricht, die in der Datenbank für inkorrekte Muster (33) gespeichert sind, und
die Entscheidungseinheit (34) entscheidet, dass die Zugriffsanforderung, die als ein inkorrekter Zugriff durch die Schätzeinheit (32) geschätzt wird, nicht an den Server (20) weiterzuleiten ist, und entscheidet, dass die Zugriffsanforderung, die als ein korrekter Zugriff durch die Schätzeinheit (32) geschätzt wird, an den Server (20) weiterzuleiten ist.

3. Filtervorrichtung (30) gemäß Anspruch 1, bei der die Schätzeinheit (32) einen vorbestimmten Schätzwert abhängig von dem Grad der Korrespondenz zwischen der Zugriffsanforderung und den Mustern von inkorrekten Zugriffen berechnet, die in der Datenbank für inkorrekte Muster (33) gespeichert sind, und
die Entscheidungseinheit (34) den durch die Schätzeinheit (32) berechneten Schätzwert mit einem vorbestimmten Schwellenwert vergleicht, um zu entscheiden, ob die Zugriffsanforderung an den Server (20) weiterzuleiten ist.

4. Filtervorrichtung (30) gemäß Anspruch 1, 2 oder 3, ferner mit:
einer Datenbank für korrekte Muster (72), die die Muster von korrekten Zugriffen auf den Server (20) speichert; und
einer Vorab-Entecheidungseinheit (71), die vor der durch die Schätzeinheit (32) durchgeführten Schätzung der Korrektheit entscheidet, ob die Zugriffsanfordening irgendeinem der Muster von korrekten Zugriffen entspricht, die in der Datenbank für korrekte Muster (72) gespeichert sind,
wobei die Schätzeinheit (32) die Korrektheit nur von der Zugriffsanforderung schätzt, für die die Vorab-Entscheidungseinheit (71) entscheidet, dass sie nicht den Mustern von korrekten Zugriffen entspricht, die in der Datenbank für korrekte Muster (72) gespeichert sind.

5. Filtervorrichtung (30) gemäß einem vorhergehenden Anspruch, ferner mit einer externen Übertragungseinheit (38), die eine Zugriffsanforderung überträgt, für die durch die Entscheidungseinheit (34) auf der Grundlage einer vorbestimmten externen Übertragungsregel (38a) entschieden wird, dass sie nicht an den Server (20) zu einer vorbestimmten externen Vorrichtung (50) weiterzuleiten ist.

6. Filtervorrichtung (30) gemäß einem vorhergehenden Anspruch, ferner mit einer Speichereinheit, die eine Zugriffsanorderung speichert, für die durch die Entscheidungseinheit (34) auf der Grundlage einer vorbestimmten Speicherregel entschieden wird, dass sie nicht an den Server (20) weiterzuleiten ist.

7. Filtervorrichtung (30) gemäß einem vorhergehenden Anspruch, ferner mit einer Aktualisierungseinheit (39), die die Datenbank für inkorrekte Muster (33), die Datenbank für korrekte Muster (72), die Schätzregel (32a), die Entscheidungsregel (34a), die externe Übertragungsregel (38a), die Speicherregel oder eine Aktualisierungsregel (39a) auf der Grundlage einer vorbestimmten Aktualisierungsregel (39a) aktualisiert.

8. Filterverfahren zum Weiterleiten an einen Server (20) nur einer korrekten Zugriffsanforderung von einem Client (10), wobei der Server (20) Dienste abhängig von Zugriffsanforderungen von dem Client (10) bereitstellt, wobei das Verfahren folgende Schritte umfasst:
Bezugnehmen auf eine Datenbank für inkorrekte Muster (33), in der die Muster von inkorrekten Zugriffen auf den Server (20) gespeichert sind, um die Korrektheit der Zugriffsanorderung auf der Grundlage der Muster von inkorrekten Zugriffen, auf die Bezug genommen wird, und einer vorbestimmten Schätzregel (32a) zu schätzen; und
Entscheiden (S303) auf der Grundlage des Ergebnisses der Schätzung bei dem Schätzschritt (S302) und einer vorbestimmten Entscheidungsregel (34a), ob die Zugriffsanforderung an den Server weiterzuleiten ist.

9. Filterverfahren gemäß Anspruch 8, bei dem bei dem Schätzschritt (S302) geschätzt wird, dass die Zugriffsanforderung ein inkorrekter Zugriff ist, wenn die Zugriffsanforderung irgendeinem der Muster von inkorrekten Zugriffen entspricht, die in der Datenbank für inkorrekte Muster (33) gespeichert sind, und geschätzt wird, dass die Zugriffsanforderung ein korrekter Zugriff ist, wenn die Zugriffsanforderung nicht irgendeinem der Muster von inkorrekten Zugriffen entspricht, die in der Datenbank für inkorrekte Muster (33) gespeichert sind, und
bei dem Entscheidungsschritt (S303) entschieden wird, dass die Zugriffsanforderung, die als ein inkorrekter Zugriff bei dem Schätzschritt (S302) geschätzt wird, nicht an den Server (20) weiterzuleiten ist, und entschieden wird, dass die Zugriffsanforderung, die als ein korrekter Zugriff bei dem Schätzschritt (S302) geschätzt wird, an den Server (20) weiterzuleiten ist.

10. Filterverfahren gemäß Anspruch 8, bei dem bei dem Schätzschritt (S302) ein vorbestimmter Schätzwert abhängig von dem Grad der Korrespondenz zwischen der Zugriffsanforderung und den Mustern von inkorrekten Zugriffen, die in der Datenbank für inkorrekte Muster (33) gespeichert sind, berechnet wird; und
bei dem Entscheidungsschritt (S303) der bei dem Schätzschritt (S302) berechnete Schätzwert mit einem vorbestimmten Schwellenwert verglichen wird (S403), um zu entscheiden (S404, S406), ob die Zugriffsanforderung an den Server (20) weiterzuleiten ist.

11. Filterverfahren gemäß Anspruch 8, 9 oder 10, ferner mit dem Vorab-Entscheidungsschritt (S602) des Entscheidens, vor der durch den Schätzschritt (S603) durchgeführten Schätzung der Korrektheit, mit Bezug auf eine Datenbank für korrekte Muster, in der Muster von korrekten Zugriffen auf den Server gespeichert sind, ob die Zugriffsanforderung irgendeinem der Muster von korrekten Zugriffen entspricht, die in der Datenbank für korrekte Muster gespeichert sind,
wobei bei dem Schätzschritt die Korrektheit von nur einer Zugriffsanforderung geschätzt wird, für die entschieden wird, dass sie nicht den Mustern von korrekten Zugriffen bei dem Vorab-Entscheidungsschritt entspricht.

12. Filterverfahren gemäß Anspruch 8, 9, 10 oder 11, ferner mit dem externen Übertragungeschritt des Übertragens einer Zugriffsanforderung, für die bei dem Entscheidungsschritt (S406, S607) auf der Grundlage einer vorbestimmten externen Übertragungsregel (37a) entschieden wird, dass sie nicht an den Server 20 zu einer vorbestimmten externen Vorrichtung (50) weiterzuleiten ist.

13. Filterverfahren gemäß Anspruch 8, 9, 10, 11 oder 12, ferner mit dem Speicherschritt des Speichers einer Zugriffsanforderung, für die bei dem Entscheidungsschritt auf der Grundlage einer vorbestimmten Speicherregel entschieden wird, dass sie nicht an den Server weiterzuleiten ist.

14. Filterverfahren gemäß Anspruch 8, 9, 10, 11, 12 oder 13, ferner mit dem Aktualisierungsschritt des Aktualisierens der Datenbank für inkorrekte Muster (33), der Datenbank für korrekte Muster (72), der Schätzregel (32a), der Entscheidungsregel (34a), der externen Übertragungsregel (37a), der Speicherregel oder einer Aktualisierungsregel (39a) auf der Grundlage einer vorbestimmten Aktualisierungsregel (39a).

15. Computerprogramm, das Anweisungen enthält, die, wenn sie auf einem Computer ausgeführt werden, ein Filterverfahren zum Weiterleiten an einen Server (20) nur einer korrekten Zugriffsanforderung von einem Client (10) verwirklicht, wobei der Server (20) Dienste abhängig von Zugriffsanforderungen von dem Client (10) bereitstellt, wobei das Verfahren folgende Schritte umfasst:
Bezugnehmen auf eine Datenbank für inkorrekte Muster (33), bei der die Muster von inkorrekten Zugriffen auf den Server (20) gespeichert sind, um die Korrektheit der Zugriffsanforderung auf der Grundlage der Muster von inkorrektem Zugriffen, auf die Bezug genommen wird, und einer vorbestimmten Schätzregel (32a) zu schätzen; und
Entscheiden (S303) auf der Grundlage eines Ergebnisses der Schätzung bei dem Schätzschritt (S302) und einer vorbestimmten Entscheidungsregel (34a), ob die Zugriffsanforderung an den Server (20) weiterzuleiten ist.

16. Computerprogramm gemäß Anspruch 15, bei dem bei dem Schätzschritt (S302) geschätzt wird, dass die Zugriffsanforderung ein inkorrekter Zugriff ist, wenn die Zugriffsanforderung irgendeinem der Muster von inkorrekten Zugriffen entspricht, die in der Datenbank für inkorrekte Muster (33) gespeichert sind, und geschätzt wird, dass die Zugriffsanforderung ein korrekter Zugriff ist, wenn die Zugriffsanforderung nicht irgendeinem der Muster von inkorrekten Zugriffen entspricht, die in der Datenbank für inkorrekte Muster (33) gespeichert sind, und
bei dem Entscheidungsschritt (S303) entschieden wird, dass die Zugriffsanforderung, die als ein inkorrekter Zugriff bei dem Schätzschritt (S302) geschätzt wird, nicht an den Server weiterzuleiten ist, und entschieden wird, dass die Zugriffsanforderung, die als ein korrekter Zugriff bei dem Schätzschritt (S302) geschätzt wird, an den Server (20) weiterzuleiten ist.

17. Computerprogramm gemäß Anspruch 15, bei dem bei dem Schätzschritt (S302) ein vorbestimmter Schätzwert abhängig von dem Grad der Korrespondenz zwischen der Zugriffsanforderung und den Mustern von inkorrekten Zugriffen, die in der Datenbank für inkorrekte Muster (33) gespeichert sind, berechnet wird, und
bei dem Entscheidungsschritt (S303) der bei dem Schätzschritt (S302) berechnete Schätzwert mit einem vorbestimmten Schwellenwert verglichen wird (S403), um zu entscheiden, ob die Zugriffsanforderung an den Server (20) weiterzuleiten ist.

18. Computerprogramm gemäß Anspruch 15, 16 oder 17, das ferner Anweisungen enthält, die, wenn sie auf einem Computer ausgeführt werden, den Vorab-Entscheidungsschritt (S602) des Entscheidens mit Bezug auf eine Datenbank für korrekte Muster (72), in der Muster von korrekten Zugriffen auf den Server (20) gespeichert sind, ob die Zugriffsanforderung irgendeinem der Muster von korrekten Zugriffen entspricht, die in der Datenbank für korrekte Muster (72) gespeichert sind, vor der durch den Schätzwert (S603) durchgeführten Schätzung der Korrektheit verwirklichen,
wobei bei dem Schätzschritt (S603) die Korrektheit nur einer Zugriffsanforderung geschätzt wird, für die bei dem Vorab-Schätzschritt (S602) entschieden wird, dass sie nicht den Mustern von korrekten Zugriffen entspricht.

19. Computerprogramm gemäß Anspruch 15, 16, 17 oder 18, das ferner Anweisungen enthält, die, wenn sie auf einem Computer ausgeführt werden, den externen Übertragungsschritt (S304, S404, S605) des Übertragens einer Zugriffsanforderung verwirklichen, für die auf der Grundlage einer vorbestimmten externen Übertragungsregel (37a) bei dem Entscheidungsschritt (S303) entschieden wird, dass sie nicht an den Server zu einer vorbestimmte externe Vorrichtung (50) weiterzuleiten ist.

20. Computerprogramm gemäß Anspruch 15, 16, 17, 18 oder 19, das ferner Anweisungen enthält, die, wenn sie auf einem Computer ausgeführt werden, den Speicherschritt des Speicherns einer Zugriffsanforderung verwirklichen, für die bei dem Entscheidungsschritt (S303) auf der Grundlage einer vorbestimmten Speicherregel entschieden wird, dass sie nicht an den Server (20) weiterzuleiten ist.

21. Computerprogramm gemäß Anspruch 15, 16, 17, 18, 19 oder 20, das ferner Anweisungen enthält, die, wenn sie auf einem Computer ausgeführt werden, den Aktualisierungsschritt des Aktualisierens der Datenbank für inkorrekte Muster, der Datenbank für korrekte Muster (72), der Schätzregel (32a), der Entscheidungsregel (34a), der externen Übertragungsregel (37a), der Speicherregel oder einer Aktualisierungsregel (39a) auf der Grundlage einer vorbestimmten Aktualisierungsregel (39a) verwirklichen.

## Revendications

1. Appareil de filtrage (30), interposé entre un client (10) et un serveur (20), ledit serveur (20) fournissant des services en fonction de demandes d'accès provenant dudit client (10), pour faire passer audit serveur (20) uniquement une demande d'accès correcte provenant dudit client (10), ledit dispositif de filtrage (30) comprenant :
une base de données de modèles incorrects (33) qui stocke des modèles d'accès incorrects audit serveur (20) ;
une unité d'évaluation (32) qui évalue l'exactitude de la demande d'accès sur la base des modèles d'accès incorrects stockés dans ladite base de données de modèles incorrects (33) et d'une règle d'évaluation prédéterminée (32a) ; et
une unité de décision (34) qui décide, sur la base d'un résultat d'évaluation par ladite unité d'évaluation (32) et d'une règle de décision prédéterminée (34a), si la demande d'accès doit être passée audit serveur (20).

2. Appareil de filtrage (30) selon la revendication 1, dans lequel ladite unité d'évaluation (32) évalue que la demande d'accès est un accès incorrect lorsque la demande d'accès correspond à l'un quelconque des modèles d'accès incorrects stockés dans ladite base de données de modèles incorrects (33), et évalue que la demande d'accès est un accès correct lorsque la demande d'accès ne correspond à aucun des modèles d'accès incorrects stockés dans ladite base de données de modèles incorrects (33), et
ladite unité de décision (34) décide que la demande d'accès qui est évaluée comme un accès incorrect par ladite unité d'évaluation (32) ne doit pas être passée audit serveur (20), et décide que la demande d'accès qui est évaluée comme un accès correct par ladite unité d'évaluation (32) doit être passée audit serveur (20).

3. Appareil de filtrage (30) selon la revendication 1, dans lequel ladite unité d'évaluation (32) calcule une valeur d'évaluation prédéterminée en fonction du degré de correspondance entre la demande d'accès et les modèles d'accès incorrects stockés dans ladite base de données de modèles incorrects (33), et
ladite unité de décision (34) compare la valeur d'évaluation calculée par ladite unité d'évaluation (32) avec une valeur seuil prédéterminée pour décider si la demande d'accès doit être passée audit serveur (20).

4. Appareil de filtrage (30) selon la revendication 1, 2 ou 3, comprenant en outre :
une base de données de modèles corrects (72) qui stocke des modèles d'accès corrects audit serveur (20) ; et
une unité de décision préalable (71) qui décide si la demande d'accès correspond à l'un quelconque des modèles d'accès corrects stockés dans ladite base de données de modèles corrects (72) avant l'évaluation de l'exactitude effectuée par ladite unité d'évaluation (32),
dans lequel ladite unité d'évaluation (32) évalue l'exactitude d'uniquement cette demande d'accès que ladite unité de décision préalable (71) juge comme ne correspondant pas aux modèles d'accès corrects stockés dans ladite base de données de modèles corrects (72).

5. Appareil de filtrage (30) selon l'une quelconque des revendications précédentes, comprenant en outre une unité de transmission externe (38) qui transmet une demande d'accès, qui est jugée par ladite unité de décision (34) comme ne devant pas être passée audit serveur (20), à un dispositif externe prédéterminé (50) sur la base d'une règle de transmission externe prédéterminée (38a).

6. Appareil de filtrage (30) selon l'une quelconque des revendications précédentes, comprenant en outre une unité de stockage qui stocke une demande d'accès qui est jugée comme ne devant pas être passée audit serveur (20) par ladite unité de décision (34) sur la base d'une règle de stockage prédéterminée.

7. Appareil de filtrage (30) selon l'une quelconque des revendications précédentes, comprenant en outre une unité de mise à jour (39) qui met à jour la base de données de modèles incorrects (33), la base de données de modèles corrects (72), la règle d'évaluation (32a), la règle de décision (34a), la règle de transmission externe (38a), la règle de stockage, ou une règle de mise à jour (39a) sur la base d'une règle de mise à jour prédéterminée (39a).

8. Procédé de filtrage pour faire passer à un serveur (20) uniquement une demande d'accès correcte provenant d'un client (10), ledit serveur (20) fournissant des services en fonction de demandes d'accès provenant dudit client (10), le procédé comprenant les étapes consistant à :
se rapporter à une base de données de modèles incorrects (33) dans laquelle les modèles d'accès incorrects audit serveur (20) sont stockés pour évaluer l'exactitude de la demande d'accès sur la base des modèles d'accès incorrects auxquels on se rapporte et d'une règle d'évaluation prédéterminée (32a) ; et
décider (S303), sur la base du résultat de l'évaluation à l'étape d'évaluation (S302) et d'une règle de décision prédéterminée (34a), si la demande d'accès doit être passée audit serveur.

9. Procédé de filtrage selon la revendication 8, dans lequel, à l'étape d'évaluation (S302), on évalue que la demande d'accès est un accès incorrect lorsque la demande d'accès correspond à l'un quelconque des modèles d'accès incorrects stockés dans la base de données de modèles incorrects (33), et on évalue que la demande d'accès est un accès correct lorsque la demande d'accès ne correspond à aucun des modèles d'accès incorrects stockés dans ladite base de données de modèles incorrects (33), et
à l'étape de décision (S303), on décide que la demande d'accès qui est évaluée comme un accès incorrect à l'étape d'évaluation (S302) ne doit pas être passée audit serveur (20), et on décide que la demande d'accès qui est évaluée comme un accès correct à l'étape d'évaluation (S302) doit être passée audit serveur (20).

10. Procédé de filtrage selon la revendication 8, dans lequel, à l'étape d'évaluation (S302), une valeur d'évaluation prédéterminée est calculée en fonction du degré de correspondance entre la demande d'accès et les modèles d'accès incorrects stockés dans ladite base de données de modèles incorrects (33), et
à ladite étape de décision (S303), la valeur d'évaluation calculée à l'étape d'évaluation (S302) est comparée (S403) à une valeur seuil prédéterminée pour décider (S404, S406) si la demande d'accès doit être passée audit serveur (20).

11. Procédé de filtrage selon la revendication 8, 9 ou 10, comprenant en outre l'étape de décision préalable (S602) consistant à décider, en référence à une base de données de modèles corrects dans laquelle sont stockés des modèles d'accès corrects audit serveur, si la demande d'accès correspond à l'un quelconque des modèles d'accès corrects stockés dans ladite base de données de modèles corrects avant l'évaluation de l'exactitude effectuée par l'étape d'évaluation (S603),
dans lequel, à l'étape d'évaluation, est évaluée l'exactitude d'uniquement une demande d'accès qui a été jugée comme ne correspondant pas aux modèles d'accès corrects à l'étape de décision préalable.

12. Procédé de filtrage selon la revendication 8, 9, 10 ou 11, comprenant en outre l'étape de transmission externe consistant à transmettre une demande d'accès, qui a été jugée comme ne devant pas être passée audit serveur (20) à l'étape de décision (S406, S607), à un dispositif externe prédéterminé (50) sur la base d'une règle de transmission externe prédéterminée (37a).

13. Procédé de filtrage selon la revendication 8, 9, 10, 11 ou 12, comprenant en outre l'étape de stockage consistant à stocker une demande d'accès qui a été jugée comme ne devant pas être passée audit serveur à l'étape de décision sur la base d'une règle de stockage prédéterminée.

14. Procédé de filtrage selon la revendication 8, 9, 10, 11, 12 ou 13, comprenant en outre l'étape de mise à jour consistant à mettre à jour la base de données de modèles incorrects (33), la base de données de modèles corrects (72), la règle d'évaluation (32a), la règle de décision (34a), la règle de transmission externe (37a), la règle de stockage, ou une règle de mise à jour (39a) sur la base d'une règle de mise à jour prédéterminée (39a).

15. Programme informatique contenant des instructions qui, lorsqu'elles sont exécutées sur un ordinateur, effectuent un procédé de filtrage consistant à faire passer à un serveur (20) uniquement une demande d'accès correcte provenant d'un client (10), ledit serveur (20) fournissant des services en fonction de demandes d'accès provenant dudit client (10), le procédé comprenant les étapes consistant à :
se rapporter à une base de données de modèles incorrects (33) dans laquelle les modèles d'accès incorrects audit serveur (20) sont stockés pour évaluer l'exactitude de la demande d'accès sur la base des modèles d'accès incorrects auxquels on se rapporte et d'une règle d'évaluation prédéterminée (32a) ; et
décider (S303), sur la base du résultat de l'évaluation à l'étape d'évaluation (S302) et d'une règle de décision prédéterminée (34a), si la demande d'accès doit être passée audit serveur.

16. Programme informatique selon la revendication 15, dans lequel à l'étape d'évaluation (S302), on évalue que la demande d'accès est un accès incorrect lorsque la demande d'accès correspond à l'un quelconque des modèles d'accès incorrects stockés dans ladite base de données de modèles incorrects (33), et on évalue que la demande d'accès est un accès correct lorsque la demande d'accès ne correspond à aucun des modèles d'accès incorrects stockés dans ladite base de données de modèles incorrects (33), et
à l'étape de décision (S303), on décide que la demande d'accès qui est évaluée comme un accès incorrect à l'étape d'évaluation (S302) ne doit pas être passée audit serveur (20), et on décide que la demande d'accès qui est évaluée comme un accès correct à l'étape d'évaluation (S302) doit être passée audit serveur (20).

17. Programme informatique selon la revendication 15, dans lequel à l'étape d'évaluation (S302), une valeur d'évaluation prédéterminée est calculée en fonction du degré de correspondance entre la demande d'accès et les modèles d'accès incorrects stockés dans ladite base de données de modèles incorrects (33), et
à ladite étape de décision (S303), la valeur d'évaluation calculée à l'étape d'évaluation (S302) est comparée (S403) à une valeur seuil prédéterminée pour décider (S404, S406) si la demande d'accès doit être passée audit serveur (20).

18. Programme informatique selon la revendication 15, 16 ou 17, contenant en outre des instructions qui, lorsqu'elles sont exécutées sur un ordinateur, effectuent l'étape de décision préalable (S602) consistant à décider, en référence à une base de données de modèles corrects (72) dans laquelle sont stockés des modèles d'accès corrects audit serveur (20), si la demande d'accès correspond à l'un quelconque des modèles d'accès corrects stockés dans ladite base de données de modèles corrects (72) avant l'évaluation de l'exactitude effectuée par l'étape d'évaluation (S603),
dans lequel à l'étape d'évaluation (S603) est évaluée l'exactitude d'uniquement une demande d'accès qui a été jugée comme ne correspondant pas aux modèles d'accès corrects à l'étape de décision préalable (S602).

19. Programme informatique selon la revendication 15, 16, 17 ou 18, comprenant en outre des instructions qui, lorsqu'elles sont exécutées sur un ordinateur, effectuent l'étape de transmission externe (S304, S404, S605) consistant à transmettre une demande d'accès, qui est jugée comme ne devant pas être passée audit serveur à l'étape de décision (S303), à un dispositif externe prédéterminé (50) sur la base d'une règle de transmission externe prédéterminée (37a).

20. Programme informatique selon la revendication 15, 16, 17, 18 ou 19, comprenant en outre des instructions qui, lorsqu'elles sont exécutées sur un ordinateur, effectuent l'étape de stockage consistant à stocker une demande d'accès, qui est jugée comme ne devant pas être passée audit serveur à l'étape de décision (S303) sur la base d'une règle de stockage prédéterminée.

21. Programme informatique selon la revendication 15, 16, 17, 18, 19 ou 20, comprenant en outre des instructions qui, lorsqu'elles sont exécutées sur un ordinateur, effectuent l'étape de mise à jour consistant à mettre à jour la base de données de modèles incorrects, la base de données de modèles corrects (72), la règle d'évaluation (32a), la règle de décision (34a), la règle de transmission externe (37a), la règle de stockage, ou une règle de mise à jour (39a) sur la base d'une règle de mise à jour prédéterminée (39a).
